# EUROPEAN PATENT SPECIFICATION

(11) **EP 1 559 352 B1**
(45) Date of publication and mention of the grant of the patent: **04.10.2006**
(21) Application number: 05100402.6
(22) Date of filing: 21.01.2005
(51) Int. Cl.: A47J 31/40, A47J 31/06

(54) **Percolating machine for making beverages**
Filtriereinrichtung zur Herstellung von Getränken
Dispositif de percolation pour la préparation de boissons

(30) Priority: 27.01.2004 IT TO20040035
(43) Date of publication of application: 03.08.2005
(73) Proprietor: SGL Italia S.r.l., 10156 Torino (IT)
(72) Inventor: Cortese, Virginio, 10100, TORINO (IT)
(74) Representative: Jorio, Paolo

(56) References cited:
- EP-A- 1 050 258

## Description

The present invention relates to a percolating machine for making beverages.

More specifically, the present invention relates to a percolating machine for making beverages from a closed container containing a powder, the machine being of the type comprising a frame; a beverage dispensing device; an infusion chamber housing a container and communicating with said dispensing device; an extraction device located on the frame along a vertical axis and at least partly movable along the vertical axis to define the infusion chamber; a drawer comprising a percolating member for supporting the container, the drawer being fitted to the frame and being movable, along a first horizontal axis and through the extraction device, between a loading position in which the container is loaded onto the percolating member, and an infusion position in which the percolating member is located inside the extraction device; and a used-container collecting box located on the frame, beneath the drawer; the infusion chamber comprising a top half-chamber along the vertical axis, and a bottom half-chamber defined by the percolating member.

Though the percolating machine according to the present invention is suitable for percolating any type of beverage produced by feeding hot water through a relative substantially anhydrous powdered or granulated food substance, specific reference is made in the following description, purely by way of example, to a percolating machine for making espresso coffee.

Percolating machines substantially of the type described above are known, for example, from WO-A-01/84993, in which, however, the percolating member or cup is not fitted to the movable drawer, and in particular from EP-A-1050258, which is considered the latest known priority.

EP-A-1050258 describes an espresso coffee percolating machine, wherein the percolating member or cup is movable with the drawer between a loading position to load a wafer containing ground coffee, and an infusion position, and wherein the frame comprises a gripper which, when the wafer in the percolating member or cup reaches the infusion position, closes onto a central flange of the wafer to make the wafer integral with the frame.

When percolation is completed and the percolating cup is moved, by extracting the drawer, into the loading position, the gripper remains closed, thus extracting the wafer from the percolating cup, and is only opened, by contrast with the drawer, when the drawer reaches the loading position, in which the percolating cup can be loaded with another wafer. When the gripper opens, the wafer drops through a hole previously closed by the percolating cup in the infusion position.

The known percolating machine described above thus provides for extracting and unloading the used wafer automatically, but not without certain drawbacks.

That is, in the event two coffees are made one immediately after the other, the wafer is damp and subject to breakage by the tangential extraction force imparted to the wafer by the horizontal movement of the percolating cup. Conversely, when two coffees are made with a certain time lapse in between, in which the gripper remains closed, the flange on the wafer is dried by the relatively high temperature inside the machine, and may stick to one of the gripper jaws, so that, when the gripper is released, the wafer fails to drop down and remains jammed between the drawer and the frame, thus preventing preparation of the next coffee.

It is an object of the present invention to provide a percolating machine of the type described above, designed to extract and unload the used wafer automatically, but involving none of the aforementioned drawbacks.

According to the present invention, there is provided a percolating machine for making beverages from a closed container containing a powder, the machine comprising a frame; a dispensing device for dispensing said beverage; an infusion chamber housing a said container and communicating with said dispensing device; an extraction device located on the frame along a vertical axis and at least partly movable along said vertical axis to define said infusion chamber; a drawer comprising a percolating member for supporting said container, the drawer being fitted to said frame and being movable, along a first horizontal axis and through said extraction device, between a loading position in which said container is loaded onto said percolating member, and an infusion position in which said percolating member is located inside said extraction device; and a collecting box for collecting the used containers and located on said frame, beneath said drawer; the infusion chamber comprising a top half-chamber along said vertical axis, and a bottom half-chamber defined by said percolating member; and the machine being characterized by comprising turnover means for rotating said percolating member on said drawer by an angle of, or equal to a multiple of, 180° about a second horizontal axis, perpendicular to said first horizontal axis, and over said collecting box, during and by movement of said drawer into said loading position.

A non-limiting embodiment of the invention will be described by way of example with reference to the accompanying drawings, in which:
Figure 1 shows a side view of a preferred embodiment of the percolating machine according to the present invention;

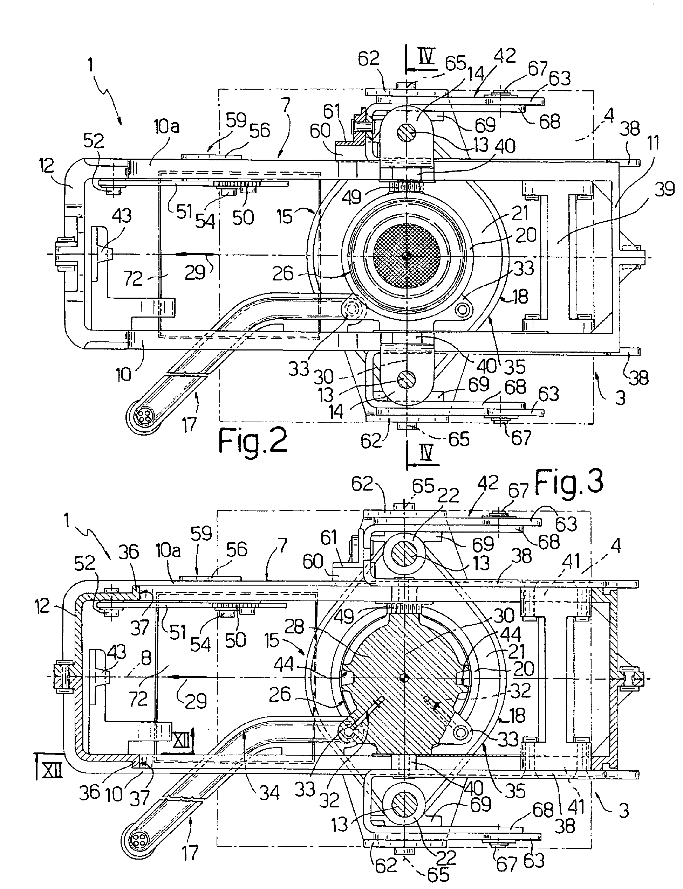

Figure 2 shows a partly sectioned plan view, with parts removed for clarity, of the Figure 1 machine;
Figure 3 shows a section along line III-III in Figure 1;
Figure 4 shows a section along line IV-IV in Figure 2;
Figure 5 shows the same view as in Figure 4 of the Figure 1 machine in a different operating position;
Figure 6 shows an axial section of a detail of the Figure 1 machine in a first operating position;
Figure 7 shows a side view of the Figure 6 detail;
Figures 8, 9, 10 show axial sections of the Figure 6 detail in respective successive operating positions;
Figure 11 shows a side view of the Figure 6 detail in an operating position immediately following the Figure 10 position;
Figure 12 shows a section along line XII-XII in Figure 3;
Figure 13 shows an axial section of the Figure 6 detail in a further successive operating position.

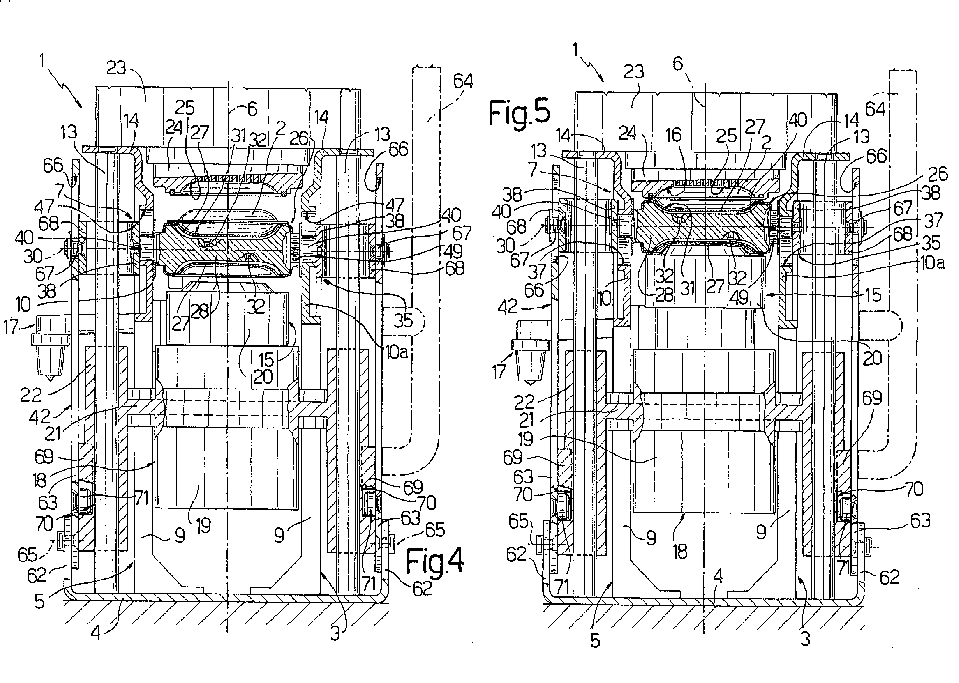

Number 1 in the accompanying drawings indicates as a whole a percolating machine for making espresso coffee from a wafer 2 (Figure 4) containing ground coffee.

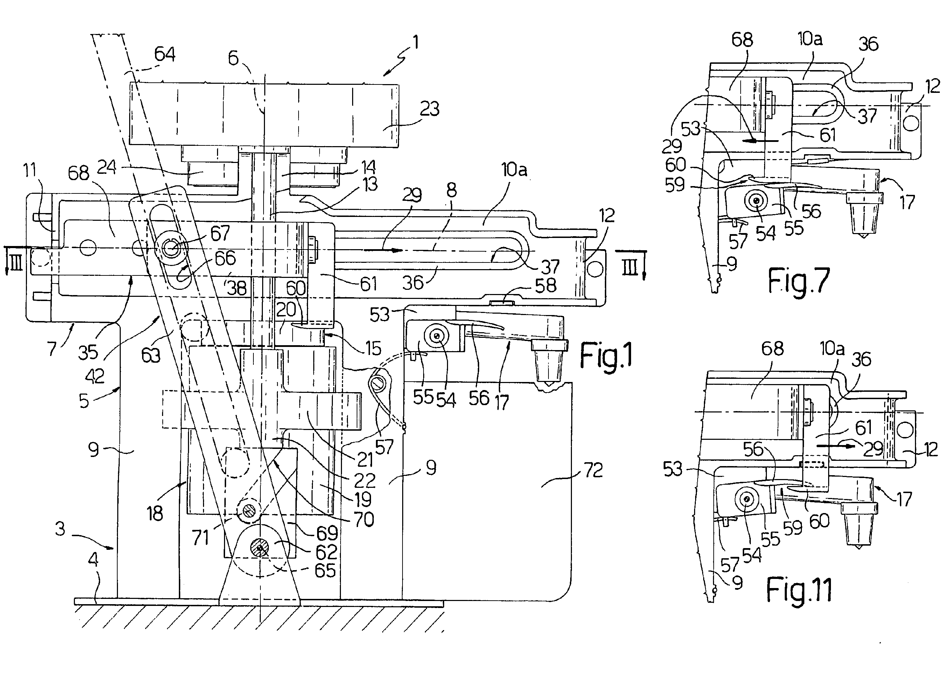

With reference to Figures 1 and 4, machine 1 comprises a frame 3, in turn comprising a base 4, a vertical portion 5 extending upwards from base 4 and having a central vertical axis 6, and an intermediate horizontal portion 7 extending across vertical portion 5 and having a central horizontal axis 8 perpendicular to vertical axis 6.

Vertical portion 5 comprises two pairs of vertical posts 9 located on opposite sides of horizontal axis 8, and the posts 9 in each pair are connected at their top ends by a plate 10, which is parallel to horizontal axis 8, projects from relative posts 9, and, together with the other plate 10 and with two cross members 11 and 12 connecting the respective corresponding ends of plates 10, defines horizontal portion 7. Vertical portion 5 also comprises two cylindrical guide columns 13, each of which extends upwards from base 4, parallel to vertical axis 6, is located outwards of posts 9 of a relative pair of posts 9 and outwards of relative plate 10, is located centrally with respect to relative posts 9, and is connected at its top end to relative plate 10 by an L-shaped bracket 14 extending upwards from an intermediate point along a top edge of plate 10.

Vertical portion 5 houses an extraction device 15, in which an infusion chamber 16 houses a wafer 2 and, by feeding in pressurized hot water, produces an espresso coffee which is fed to a dispensing device 17 fitted to frame 3, beneath infusion chamber 16.

Extraction device 15 comprises a piston 18 coaxial with vertical axis 6, located between posts 9, and in turn comprising a bottom body 19, and a movable output head 20 projecting from the top of body 19 and also coaxial with vertical axis 6. At its top end, body 19 has a substantially circular flange 21, to the periphery of which are connected two diametrically opposite sleeves 22, each fitted in sliding manner onto a respective column 13.

Extraction device 15 also comprises a known boiler 23, which is connected to brackets 14 and to the top ends of columns 13, is located over plates 10, and completes vertical portion 5. Boiler 23 is provided underneath with a concave sprinkler 24, which is coaxial with vertical axis 6, with its concavity facing downwards, and defines a top half-chamber 25 of infusion chamber 16.

Extraction device 15 also comprises a percolating member 26, which is located between plates 10, comprises two opposite percolating cups 27 connected by a cylindrical intermediate body 28, and, as explained later on, is movable, along plates 10 and in a direction 29 parallel to horizontal axis 8, to and from an operating position (Figure 4) in which percolating member 26 is located between sprinkler 24 and head 20, and can be turned over, about a horizontal axis 30 perpendicular to vertical axis 6 and horizontal axis 8, to selectively position each percolating cup 27 facing sprinkler 24, and to define a bottom half-chamber 31 of infusion chamber 16.

Each percolating cup 27 communicates with a respective drain conduit 32 formed through intermediate body 28 and having an external spout 33 which, when percolating member 26 is in the operating position and relative percolating cup 27 is positioned facing sprinkler 24, extends parallel to vertical axis 6 and over an inlet end of a drain channel 34 fitted to frame 3 and defining dispensing device 17.

Percolating member 26 forms part of a drawer 35 fitted to horizontal portion 7, between plates 10, and movable in direction 29 along a guide 36 defined by two slots 37, each formed along respective plate 10 and parallel to horizontal axis 8. Drawer 35 comprises two lateral plates 38, each of which is located outwards of a relative plate 10, and is connected to the other lateral plate 38, at one end, by a cross member 39 parallel to horizontal axis 30 and connecting the ends of the two lateral plates 38 facing cross member 11, and, at the other end, by a pin 40 coaxial with horizontal axis 30, fitted with intermediate body 28 of percolating member 26, and extending diametrically through intermediate body 28. Pin 40 and cross member 39 extend in transversely sliding manner through the two slots 37, and cross member 39 comprises, inside each slot 37, a respective substantially rectangular slide shoe 41. By means of an actuating device 42 described later on, drawer 35 is moved along guide 36 between an infusion position, in which percolating member 26 is set to the operating position coaxial with vertical axis 6, and shoes 41 are positioned contacting the ends of slots 37 facing cross member 11, and a loading position, in which percolating member 26 is positioned contacting cross member 12, and is locked angularly about horizontal axis 30 by a pin 43, integral with cross member 12 and coaxial with horizontal axis 8, engaging one of two diametrically opposite cavities 44 formed in intermediate body 28. At the end facing cross member 11, each slot 37 of drawer 35 has a wide portion 45 enabling drawer 35, in the infusion position, to rotate upwards about an axis 46 extending substantially along an edge of cross member 39 facing cross member 11; for which purpose, a slot 47 extends upwards from an intermediate point along each slot 37, and is engaged in transversely sliding manner by pin 40 when drawer 35 is rotated upwards.

Machine 1 also comprises a turnover device 48, in turn comprising a pinion 49 fitted to pin 40 between intermediate body 28 and one of plates 10, hereinafter indicated 10a; and a rack 50 located along slot 37 of plate 10a and, as explained later on, engaged by pinion 49 as drawer 35 moves from the infusion position to the loading position. Rack 50 is formed along a top edge of a lever 51 extending towards cross member 11 from a pin 52 fitted through plate 10a close to cross member 12 and parallel to horizontal axis 30. Close to its free end, lever 51 has rack 50 on top and, underneath, an appendix 53 fitted in rotary manner, by means of a pin 54 parallel to pin 52, with a block 55 located beneath plate 10a and fitted laterally with a projecting flexible plate 56, which slopes upwards towards cross member 11 and extends beneath and outwards of plate 10a. A spring 57 is interposed and compressed between block 55 and one of posts 9 to push lever 51 upwards and keep lever 51 in a normal raised position in which a lateral stop 58 on lever 51 engages a bottom edge of plate 10a, and rack 50 is located along the path of pinion 49 as drawer 35 moves into the loading position.

Plate 56 forms part of a control device 59, which also comprises a horizontal shoe 60 fitted to drawer 35, by means of a bracket 61, outwards of and beneath plate 10a, and movable with drawer 35 along a horizontal path parallel to horizontal axis 8 and crossed by plate 56.

Actuating device 42 has the dual function of moving drawer 35 along guide 36, and moving piston 18 towards boiler 23 as drawer 35 moves into the infusion position.

To move drawer 35 along guide 36, actuating device 42 comprises two brackets 62, each of which is integral with base 4 and, outwards of relative column 13, extends upwards from base 4 in a vertical plane parallel to the plane defined by vertical axis 6 and horizontal axis 8. Actuating device 42 also comprises, for each bracket 62, a link 63, one of which is integral with an external operating handle 64, is hinged to relative bracket 62 to rotate, with respect to frame 3, about an axis 65 parallel to horizontal axis 30, and comprises a slot 66 engaged in transversely sliding manner by a relative pin 67 parallel to horizontal axis 30 and projecting outwards from a bracket 68 integral with relative lateral plate 38.

To move piston 18 towards boiler 23, actuating device 42 comprises, for each link 63, a plate 69, which is parallel to relative bracket 62, is integral with relative sleeve 22, faces relative link 63, and has, on the side facing link 63, an inclined groove 70 engaged by a pin 71 projecting from relative link 63 and parallel to relative axis 65.

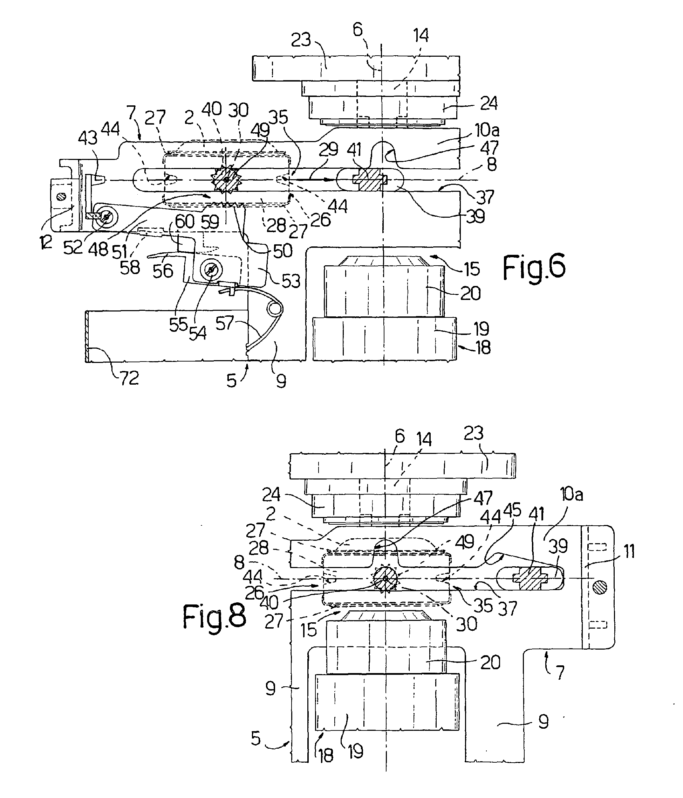

Operation of machine 1 will now be described with reference to Figure 1 and Figures 6 to 13, and as of an operating position (Figure 13) immediately preceding the Figure 6 position, and in which drawer 35 is in the loading position, with percolating member 26 locked angularly with respect to horizontal axis 30 by pin 43, so that one percolating cup 27 faces upwards, and the other percolating cup 27 faces downwards.

At this point, the user places a wafer 2 inside the top percolating cup 27 and operates external handle 64 to move the two links 63 towards cross member 11, so that, on the one hand, drawer 35 moves into the infusion position, and, on the other, the two pins 71 move down along respective grooves 70 to raise the whole of piston 18 so that head 20 is positioned with its top end substantially tangent to the path travelled by percolating member 26 when moving into the infusion position.

As shown in Figures 6 and 7, as drawer 35 moves into the infusion position, shoe 60 engages the top surface of plate 56 and applies downward pressure on plate 56 to rotate lever 51 downwards and so move rack 50 downwards into a position of non-interference with pinion 49. Consequently, pinion 49 does not engage rack 50, and no torque is applied to pin 40 as percolating member 26 moves into the infusion position.

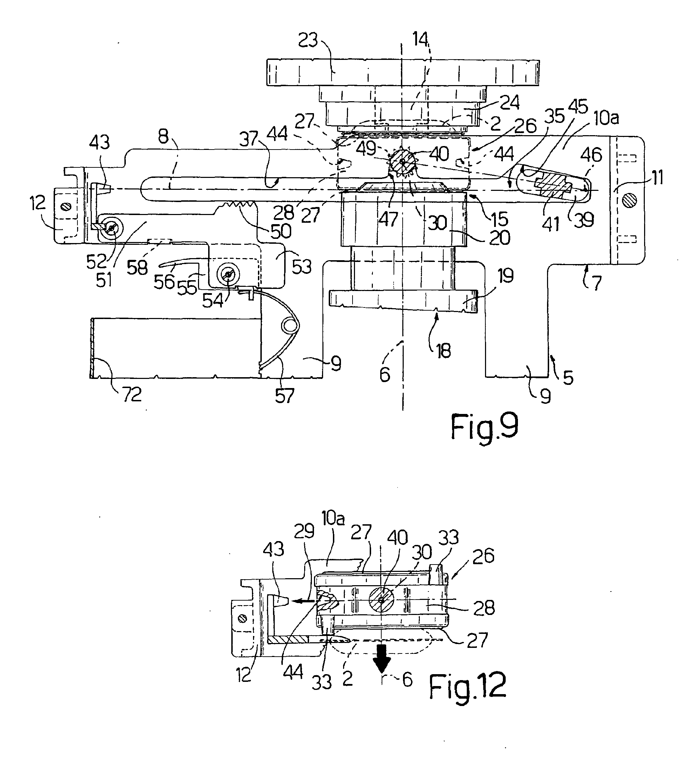

As percolating member 26 and wafer 2 reach the infusion position coaxial with vertical axis 6 (Figure 8), pressurized water is fed in known manner to piston 18 to raise head 20, which engages the bottom percolating cup 27 and pushes percolating member 26 upwards (Figure 9), so that drawer 35 rotates about axis 46, pin 40 moves along slits 47, and the top percolating cup 27 contacts sprinkler 24 in fluidtight manner to define infusion chamber 16 and close wafer 2 inside infusion chamber 16. As infusion chamber 16 is sealed in fluidtight manner, hot water is fed in known manner through wafer 2 to produce an espresso coffee, which flows along relative drain conduit 32 and out through relative spout 33 into drain channel 34. When the hot water is cut off, head 20 moves down and drawer 35 moves back into its initial horizontal position, so that infusion chamber 16 opens, and the used wafer 2 moves down and remains resting on top percolating cup 27.

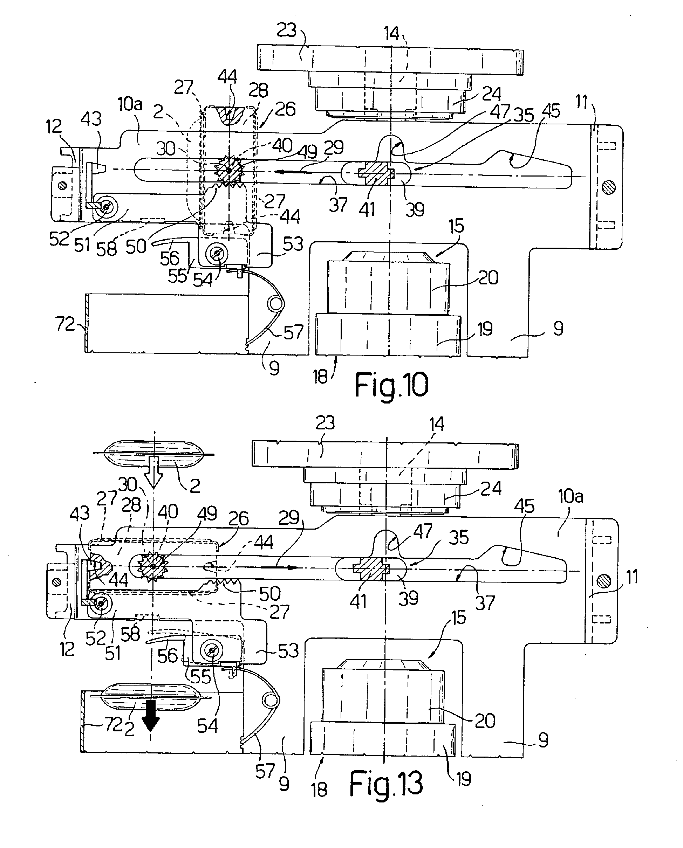

To make another espresso coffee, the user operates external handle 64 to move drawer 35 into the loading position. In the course of which movement, shoe 60 slides along the top surface of plate 56 to lock lever 51 with its lateral stop 58 contacting the bottom edge of plate 10a as pinion 49 reaches rack 50, which rotates pinion 49 (Figures 10 and 11) to turn percolating member 26 over through 180° about horizontal axis 30 and over a box 72 located beneath horizontal portion 7, so that the used wafer 2 drops down between plates 10 into box 72.

In connection with the above, it should be pointed out that turnover of percolating member 26, which in itself is relatively fast, always detaches the used wafer 2 from relative percolating cup 27.

Once the percolating member is turned over, the previously downward-facing percolating cup 27 is positioned facing upwards, ready to receive another wafer 2 when drawer 35 moves into the loading position.

In an alternative embodiment (not shown) of the invention, external handle 64 is replaced by a powered actuating device. In a further embodiment not shown, rack 50 is longer than in the preferred embodiment described above, and, in particular, is of such a length that, when pinion 49 engages rack 50, percolating member 26 is rotated 360° about horizontal axis 30; in which case, percolating member 26 obviously has only one percolating cup 27.

## Claims

1. A percolating machine for making beverages from a closed container (2) containing a powder, the machine (1) comprising a frame (3); a dispensing device (17) for dispensing said beverage; an infusion chamber (16) housing a said container (2) and communicating with said dispensing device (17); an extraction device (15) located on the frame (3) along a vertical axis (6) and at least partly movable along said vertical axis (6) to define said infusion chamber (16); a drawer (35) comprising a percolating member (26) for supporting said container (2), the drawer (35) being fitted to said frame (3) and being movable, along a first horizontal axis (8) and through said extraction device (15), between a loading position in which said container (2) is loaded onto said percolating member (26), and an infusion position in which said percolating member (26) is located inside said extraction device (15); and a collecting box (72) for collecting the used containers (2) and located on said frame (3), beneath said drawer (35); the infusion chamber (16) comprising a top half-chamber (25) along said vertical axis (6), and a bottom half-chamber (31) defined by said percolating member (26); and the machine (1) being **characterized by** comprising turnover means (48) for rotating said percolating member (26) on said drawer (35) by an angle of, or equal to a multiple of, 180° about a second horizontal axis (30), perpendicular to said first horizontal axis (8), and over said collecting box (72), during and by movement of said drawer (35) into said loading position.

2. A machine as claimed in Claim 1, wherein said percolating member (26) comprises two opposite percolating cups (27); and an intermediate body (28) interposed between the two percolating cups (27); said angle being an angle of 180°.

3. A machine as claimed in Claim 1 or 2, wherein said dispensing device (17) comprises a drain channel (34) fitted to said frame (3) and communicating with said percolating member (26) when the percolating member (26) is in said infusion position.

4. A machine as claimed in Claims 2 and 3, wherein each said percolating cup (27) has a respective drain conduit (32) formed through said intermediate body (28) and having a respective outlet (33); said drain channel (34), when said percolating member (26) is in said infusion position, communicating with the outlet (33) of the percolating cup (27) facing said top half-chamber (25).

5. A machine as claimed in one of the foregoing Claims, wherein said frame (3) comprises a guide (36) extending parallel to said first horizontal axis (8) to guide said drawer (35) between said loading position and said infusion position; said percolating member (26) comprising a pin (40) coaxial with said second horizontal axis (30) and connected in sliding and rotary manner to said guide (36); and actuating means (42) being connected to said pin (40) to move said drawer (35) along said guide (36).

6. A machine as claimed in Claim 5, wherein said turnover means (48) comprise a pinion (49) fitted to said pin (40); and a rack (50) located along said guide (36) and engaged by said pinion (49) to rotate the percolating member (26) by said angle as said drawer (35) moves parallel to said first horizontal axis (8) into said loading position.

7. A machine as claimed in Claim 6, wherein said rack (50) is fitted to said guide (36) to move, with respect to the guide (36) and transversely with respect to said second horizontal axis (30), between an engaged position along a path of said pinion (49) parallel to said first horizontal axis (8), and a release position disengaging said pinion (49); control means (59) being provided to move said rack (50) into said release position as said drawer (35) moves into said infusion position.

8. A machine as claimed in Claim 7, wherein elastic means (57) are provided to push said rack (50) into said engaged position; said control means (59) locking said rack (50) in said engaged position as said drawer (35) moves into said loading position.

9. A machine as claimed in Claim 7 or 8, wherein said control means (59) comprise a horizontal shoe (60) integral with said drawer (35) and movable with the drawer (35) along a path parallel to said first horizontal axis (8); and a plate (56) fitted to said rack (50) and sloping upwards and towards said infusion position across said path of said shoe (60).

10. A machine as claimed in one of the foregoing Claims, and comprising locking means (43, 44) for locking said percolating member (26) angularly about said second horizontal axis (30) when said drawer (35) is in said loading position.

11. A machine as claimed in any one of the foregoing Claims, wherein, in addition to said percolating member (26), said drawer (35) also comprises two side by side lateral plates (38) parallel to said first horizontal axis (8), located on opposite sides of said percolating member (26), and each having a first and a second end; a pin (40) connecting said first ends, said pin (40) being coaxial with said second horizontal axis (30), extending through said percolating member (26), and being connected in angularly fixed manner to the percolating member (26), and in rotary manner to said lateral plates (38); and a cross member (39), which has a third horizontal axis (46) parallel to said second horizontal axis (30), and connects said second ends.

12. A machine as claimed in Claim 11, wherein said frame (3) comprises a first guide (36) parallel to said first horizontal axis (8) and engaged in sliding manner by said pin (40) and by said cross member (39) to guide said drawer (35) between said loading position and said infusion position, and in rotary manner by said cross member (39) when said drawer (35) is in said infusion position; and a second guide (47) parallel to said vertical axis (6) and engageable in transversely sliding manner by said pin (40) when the drawer (35) is in said infusion position.

13. A machine as claimed in Claim 12, wherein said top half-chamber (25) is defined by a fixed sprinkler (24), and said extraction device (15) comprises piston means (18) located along said vertical axis (6), beneath said drawer (35), and which, when the drawer (35) is in said infusion position, engage said percolating member (26) to move said pin (40) along said second guide (47), so as to rotate said drawer (35) about said third horizontal axis (46), and said percolating member (26) into fluidtight engagement with said sprinkler (24).

## Patentansprüche

1. Durchlaufmaschine zum Herstellen von Getränken unter Verwendung eines ein Pulver enthaltenen geschlossenen Behälters (2), welche Maschine (1) einen Rahmen (3), eine Ausgabeeinrichtung (17) zum Ausgeben des Getränks, eine Aufgusskammer (16), die den Behälter (2) aufnimmt und mit der Ausgabeeinrichtung (17) in Verbindung steht, eine Extraktionseinrichtung (15), die am Rahmen (3) längs einer vertikalen Achse (6) angeordnet und wenigstens teilweise längs der vertikalen Achse (6) bewegbar ist, um die Aufgusskammer (16) zu begrenzen, einen Schieber (35), der ein Durchlaufelement (26) zum Halten des Behälters (2) umfasst, welcher Schieber (35) am Rahmen (3) angebracht und längs einer ersten horizontalen Achse (8) und durch die Extraktionsvorrichtung (15) zwischen einer Ladeposition, in der der Behälter (2) auf das Durchlaufelement (25) geladen wird, und einer Aufgussposition bewegbar ist, in der das Durchlaufelement (26) sich im Inneren der Extraktionseinrichtung (15) befindet, und einen Sammelkasten (72) zum Sammeln der benutzten Behälter (2) umfasst, der sich am Rahmen (3) unter dem Schieber (35) befindet, wobei die Aufgusskammer (16) eine obere Halbkammer (25) längs der vertikalen Achse (6) und eine untere Halbkammer (31) umfasst, die von dem Durchlaufelement (26) begrenzt wird, welche Maschine (1) **dadurch gekennzeichnet ist, dass** sie Dreheinrichtungen (48) umfasst, um das Durchlaufelement (36) am Schieber (35) um einen Winkel gleich oder einem Vielfachen von 180° um eine zweite horizontale Achse (30) senkrecht zur ersten horizontalen Achse (8) und über den Sammelkasten (72) während der und durch die Bewegung des Schiebers (35) in die Ladeposition zu drehen.

2. Maschine nach Anspruch 1, bei der das Durchlaufelement (26) zwei gegenüberliegende Durchlaufschalen (27) umfasst, und ein Zwischenkörper (28) zwischen den beiden Durchlaufschalen (27) angeordnet ist, wobei der genannte Winkel 180° beträgt.

3. Maschine nach Anspruch 1 oder 2, bei der die Ausgabeeinrichtung (17) einen Auslaufkanal (34) umfasst, der am Rahmen (3) angebracht ist und mit dem Durchlaufelement (26) in Verbindung steht, wenn sich das Durchlaufelement (26) in der Aufgussposition befindet.

4. Maschine nach. Anspruch 2 und 3, bei der jede Durchlaufschale (27) eine jeweilige Auslaufleitung (32) aufweist, die durch den Zwischenkörper (28) ausgebildet ist und einen jeweiligen Auslass (33) aufweist, wobei der Auslaufkanal (34) dann, wenn sich das Durchlaufelement (26) in der Aufgussposition befindet, mit dem Auslass (33) der Durchlaufschale (27) in Verbindung steht, die der oberen Halbkammer (25) zugewandt ist.

5. Maschine nach einem der vorhergehenden Ansprüche, bei der der Rahmen (3) eine Führung (36) umfasst, die parallel zur ersten horizontalen Achse (8) verläuft, um den Schieber (35) zwischen der Ladeposition und der Aufgussposition zu führen, das Durchlaufelement (26) einen Stift (40) umfasst, der koaxial zu der zweiten horizontalen Achse (30) ist und in gleitender und drehender Weise mit der Führung (36) verbunden ist, und Betätigungseinrichtungen (42) mit dem Stift (40) verbunden sind, um den Schieber (35) entlang der Führung (36) zu bewegen.

6. Maschine nach Anspruch 5, bei der die Dreheinrichtungen (48) ein Ritzel (49), das am Stift (40) angebracht ist, und eine Zahnstange (50) umfassen, die entlang der Führung (36) angeordnet ist und vom Ritzel (49) in Eingriff genommen wird, um das Durchlaufelement (26) um den besagten Winkel zu drehen, wenn sich der Schieber (35) parallel zur ersten horizontalen Achse (8) in die Ladeposition bewegt.

7. Maschine nach Anspruch 6, bei der die Zahnstange (50) an der Führung (36) so angebracht ist, dass sie sich bezüglich der Führung (36) quer zur zweiten horizontalen Achse (30) zwischen einer Eingriffsposition entlang eines Weges des Ritzels (49) parallel zur ersten horizontalen Achse (8) und einer Freigabeposition bewegt, in der das Ritzel (49) gelöst ist, und Steuereinrichtungen (59) vorgesehen sind, um die Zahnstange (50) in die Freigabeposition zu bewegen, wenn sich der Schieber (35) in die Aufgussposition bewegt.

8. Maschine nach Anspruch 7, bei der elastische Einrichtungen (57) vorgesehen sind, um die Zahnstange (50) in die Eingriffsposition zu drücken, wobei die Steuereinrichtungen (59) die Zahnstange (50) in der Eingriffsposition verriegeln, wenn sich der Schieber (35) in die Ladeposition bewegt.

9. Maschine nach Anspruch 7 oder 8, bei der die Steuereinrichtungen (59) einen horizontalen Schuh (60), der in einem Stück mit dem Schieber (35) ausgebildet und mit dem Schieber (35) entlang eines Weges parallel zur ersten horizontalen Achse (8) bewegbar ist, und eine Platte (56) umfassen, die an der Zahnstange (50) angebracht ist und schräg nach oben zur Aufgussposition quer über den Weg des Schuhs (60) verläuft.

10. Maschine nach einem der vorhergehenden Ansprüche mit einer Verriegelungseinrichtung (43, 44) zum Verriegeln des Durchlaufelementes (26) im Winkel um die zweite horizontale Achse (30), wenn sich der Schieber (35) in der Ladeposition befindet.

11. Maschine nach einem der vorhergehenden Ansprüche, bei der zusätzlich zum Durchlaufelement (26) der Schieber (35) auch zwei Seite an Seite angeordnete seitliche Platten (38) parallel zur ersten horizontalen Achse (8), die sich auf gegenüberliegenden Seiten des Durchlaufelementes (26) befinden und von denen jede ein erstes und ein zweites Ende aufweist, einen Stift (40), der die ersten Enden verbindet, welcher Stift (40) koaxial zur zweiten horizontalen Achse (30) verläuft, sich durch das Durchlaufelement (26) erstreckt und in einer im Winkel festen Weise mit dem Durchlaufelement (26) und drehend mit den seitlichen Platten (38) verbunden ist, und ein Querelement (39) umfasst, das eine dritte horizontale Achse (46) parallel zur zweiten horizontalen Achse (30) aufweist und die zweiten Enden verbindet.

12. Maschine nach Anspruch 11, bei der der Rahmen (3) eine erste Führung (36) parallel zur ersten horizontalen Achse (8), die in gleitender Weise vom Stift (40) und vom Querelement (39) zum Führen des Schiebers (35) zwischen der Ladeposition und der Aufgussposition und drehend vom Querelement (39) erfasst wird, wenn sich der Schieber (35) in der Aufgussposition befindet, und eine zweite Führung (47) parallel zur vertikalen Achse (6) umfasst, die in einer transversal gleitenden Weise vom Stift (40) erfasst werden kann, wenn sich der Schieber (35) in der Aufgussposition befindet.

13. Maschine nach Anspruch 12, bei der die obere Halbkammer (25) von einem festen Aufgießer (24) begrenzt wird und die Extraktionseinrichtung (15) eine Kolbeneinrichtung (18) umfasst, die entlang der vertikalen Achse (6) unter dem Schieber (35) angeordnet ist und die dann, wenn sich der Schieber in der Ausgussposition befindet, das Durchlaufelement (26) erfasst, um den Stift (40) entlang der zweiten Führung (47) zu bewegen und **dadurch** den Schieber (35) um die dritte horizontale Achse (46) und das Durchlaufelement (26) in eine fluiddichte Ineingriffnahme mit dem Aufgießer (24) zu drehen.

## Revendications

1. Machine de percolation destinée à faire des boissons depuis un conteneur fermé (2) contenant une poudre, la machine (1) comprenant un châssis (3) ; un dispositif de distribution (17) destiné à distribuer ladite boisson ; une chambre d'infusion (16) logeant un dit conteneur (2) et communiquant avec ledit dispositif de distribution (17) ; un dispositif d'extraction (15) situé sur le châssis (3) le long d'un axe vertical (6) et au moins partiellement mobile le long dudit axe vertical (6) afin de définir ladite chambre d'infusion (16) ; un tiroir (35) comprenant un élément de percolation (26) destiné à supporter ledit conteneur (2), le tiroir (35) étant ajusté sur ledit châssis (3) et étant mobile, le long d'un premier axe horizontal (8) et à travers ledit dispositif d'extraction (15), entre une position de chargement dans laquelle ledit conteneur (2) est chargé sur ledit élément de percolation (26) et une position d'infusion dans laquelle ledit élément de percolation (26) est situé à l'intérieur dudit dispositif d'extraction (15) ; et une boîte de collecte (72) destinée à collecter les conteneurs utilisés (2) et située sur ledit châssis (3), en dessous dudit tiroir (35) ; la chambre d'infusion (16) comprenant une moitié de chambre supérieure (25) le long dudit axe vertical (6) et une moitié de chambre inférieure (31) définie par ledit élément de percolation (26) ; et la machine (1) étant **caractérisée en ce qu'**elle comprend des moyens de changement (48) destinés à faire tourner ledit élément de percolation (26) sur ledit tiroir (35) selon un angle de, ou égal à un multiple de, 180° autour d'un deuxième axe horizontal (30) perpendiculaire audit premier axe horizontal (8) et sur ladite boîte de collecte (72), pendant et par le mouvement dudit tiroir (35) dans ladite position de chargement.

2. Machine selon la revendication 1, dans laquelle ledit élément de percolation (26) comprend deux tasses de percolation opposées (27) ; et un corps intermédiaire (28) interposé entre les deux tasses de percolation (27) ; ledit angle étant un angle de 180°.

3. Machine selon la revendication 1 ou 2, dans laquelle ledit dispositif de distribution (17) comprend un canal de drainage (34) ajusté sur ledit châssis (3) et communiquant avec ledit élément de percolation (26) lorsque l'élément de percolation (26) se trouve dans ladite position d'infusion.

4. Machine selon les revendications 2 et 3, dans laquelle chaque dite tasse de percolation (27) comporte une conduite de drainage respective (32) formée à travers ledit corps intermédiaire (28) et ayant une sortie respective (33) ; ledit canal de drainage (34), lorsque ledit élément de percolation (26) se trouve dans ladite position d'infusion, communiquant avec la sortie (33) de la tasse de percolation (27) faisant face à ladite moitié de chambre supérieure (25).

5. Machine selon l'une quelconque des revendications précédentes, dans laquelle ledit châssis (3) comprend un guide (36) s'étendant de manière parallèle audit premier axe horizontal (8) afin de guider ledit tiroir (35) entre ladite position de chargement et ladite position d'infusion ; ledit élément de percolation (26) comprenant une broche (40) coaxiale avec ledit deuxième axe horizontal (30) et connecté d'une manière coulissante et rotative audit guide (36) ; et des moyens d'actionnement (42) étant connectés à ladite broche (40) afin de déplacer ledit tiroir (35) le long dudit guide (36).

6. Machine selon la revendication 5, dans laquelle lesdits moyens de changement (48) comprennent un pignon (49) ajusté sur ladite broche (40) ; et une crémaillère (50) située le long dudit guide (36) et engagée par ledit pignon (49) afin de faire tourner l'élément de percolation (26) par ledit angle lorsque ledit tiroir (35) se déplace de manière parallèle audit premier axe horizontal (8) dans ladite position de chargement.

7. Machine selon la revendication 6, dans laquelle ladite crémaillère (50) est ajustée sur ledit guide (36) afin de déplacer, par rapport au guide (36) et de manière transversale par rapport audit deuxième axe horizontal (30), entre une position engagée le long d'un trajet dudit pignon (49) parallèle audit premier axe horizontal (8) et une position relâchée désengageant ledit pignon (49) ; des moyens de commande (59) étant prévus afin de déplacer ladite crémaillère (50) dans ladite position relâchée lorsque ledit tiroir (35) se déplace dans ladite position d'infusion.

8. Machine selon la revendication 7, dans laquelle des moyens élastiques (57) sont prévus afin de pousser ladite crémaillère (50) dans ladite position engagée ; lesdits moyens de commande (59) verrouillant ladite crémaillère (50) dans ladite position engagée lorsque ledit tiroir (35) se déplace dans ladite position de chargement.

9. Machine selon la revendication 7 ou 8, dans laquelle lesdits moyens de commande (59) comprennent une chaussure horizontale (60) intégrée avec ledit tiroir (35) et mobile avec le tiroir (35) le long d'un trajet parallèle audit premier axe horizontal (8) ; et une plaque (56) ajusté sur ladite crémaillère (50) et faisant une pente vers le haut et vers ladite position d'infusion à travers ledit trajet de ladite chaussure (60).

10. Machine selon l'une quelconque des revendications précédentes, et comprenant des moyens de verrouillage (43, 44) destinés à verrouiller ledit élément de percolation (26) de manière angulaire autour dudit deuxième axe horizontal (30) lorsque ledit tiroir (35) se trouve dans ladite position de chargement.

11. Machine selon l'une quelconque des revendications précédentes, dans laquelle, en plus dudit élément de percolation (26), ledit tiroir (35) comprend également deux plaques latérales côte à côte (38) parallèles audit premier axe horizontal (8) situées sur des côtés opposés dudit élément de percolation (26) et ayant chacune une première et une seconde extrémités ; une broche (40) connectant lesdites premières extrémités, ladite broche (40) étant coaxiale avec ledit deuxième axe horizontal (30), s'étendant à travers ledit élément de percolation (26) et étant connecté d'une manière angulaire fixe à l'élément de percolation (26), et d'une manière rotative aux dites plaques latérales (38) ; et un élément transversal (39) qui a un troisième axe horizontal (46) parallèle audit deuxième axe horizontal (30), et connecte lesdites secondes extrémités.

12. Machine selon la revendication 11, dans laquelle ledit châssis (3) comprend un premier guide (36) parallèle audit premier axe horizontal (8) et engagé d'une manière coulissant par ladite broche (40) et par ledit élément transversal (39) afin de guider ledit tiroir (35) entre ladite position de chargement et ladite position d'infusion et d'une manière rotative par ledit élément transversale (39) lorsque ledit tiroir (35) se trouve dans ladite position d'infusion ; et un second guide (47) parallèle audit axe vertical (6) et pouvant être engagé d'une manière coulissante dans le sens transversal par ladite broche (40) lorsque le tiroir (35) se trouve dans ladite position d'infusion.

13. Machine selon la revendication 12, dans laquelle ladite moitié de chambre supérieure (25) est définie par un sprinkler fixe (24) et ledit dispositif d'extraction (15) comprend des moyens formant piston (18) situés le long dudit axe vertical (6) en dessous dudit tiroir (35), et qui, lorsque le tiroir (35) se trouve dans ladite position d'infusion, engagent ledit élément de percolation (26) afin de déplacer ladite broche (40) le long dudit second guide (47), de telle manière à faire tourner ledit tiroir (35) autour dudit troisième axe horizontal (46) et ledit élément de percolation (26) en engagement étanche aux fluides avec ledit sprinkler (24).
